# EUROPEAN PATENT APPLICATION

(11) **EP 1 337 089 A2**
(43) Date of publication of application: **20.08.2003**
(21) Application number: 03250988.7
(22) Date of filing: 18.02.2003
(51) Int. Cl.: H04L 29/06, H04L 12/24

(54) **System and method for maintaining the physical location association of an IP telephone**

(30) Priority: 19.02.2002 US 80039
(71) Applicant: Mitel Knowledge Corporation, Ottawa, Ontario K2K 2W7 (CA)
(72) Inventor: Dunlap, Edward Darl, Lawrenceville, GA 30043 (US); Kittle, George Thomas, Centerville, VA 20121 (US); Pucyk, Andre Joseph, Scarborough, Ontario M1V 3G9 (CA)
(74) Representative: Beresford, Keith Denis Lewis

(57) **Abstract**

There is provided a method of maintaining physical location association with an IP telephony instrument. When a change of an Ethernet MAC address on a switch port is detected, an IP telephony call controller is notified of the change. At least one information prompt is sent from the IP telephony call controller to the IP telephony instrument. A response including a physical location of the IP telephony instrument is received and the physical location associated with the IP telephony instrument is maintained.

## Description

### Field of the Invention

The present invention relates to IP based telephony systems and in particular to an IP based telephony system with improved location information provisions for relocation of an IP device.

### Background of the Invention

It is important to maintain physical location information associated with a telephone for emergency services. In many jurisdictions this association is required for regulatory compliance in order to provide location information to a dispatcher in the event of an emergency (ie. 911 telephone call).

Conventional time division multiplexed (TDM) telephony systems have a fixed association of a given port to a physical location. While each port can be reconfigured, for example, to a different extension number, telephone type or feature set, the physical location associated with the port does not change. Thus, the location information is based on the physical association with the port and maintaining telephone number and associated location information is straightforward.

IP based telephony systems separate telephony call control from physical switch ports. One advantage of IP based telephony is the ability to move IP telephones to any location on a network without having to register any of the typical moves, adds or changes on the system since each IP telephone is uniquely identified through a unique Ethernet address. Thus, telephony features associated with a particular telephone are portable with the physical telephone set and remain constant regardless of what port the telephone is connected to. While this portability is beneficial, location information associated with each telephone may not be maintained since the telephony call controller no longer has a fixed association of physical location to the telephony instrument. There is no known method to ensure that physical location association with IP telephony instruments is maintained.

Many standard protocols and procedures exist for TCP/IP based networking systems including standard procedures for handling real time telephony. None of these standard protocols, however, offer a complete solution for enhanced emergency services (911) for IP telephony.

It is therefore an object of an aspect of the present invention to provide a method for maintaining physical location association with IP telephony instruments.

### Summary of the Invention

In one aspect of the present invention there is provided a method of maintaining physical location association with an IP telephony instrument on a network. The method comprises the steps of: detecting a change of an Ethernet MAC address on a switch port; notifying an IP telephony call controller of the change; sending at least one information prompt from the IP telephony call controller to the IP telephony instrument; receiving a response to the at least one information prompt, the response including a physical location of the IP telephony instrument; and maintaining the physical location in association with the IP telephony instrument.
In another aspect of the present invention there is provided a method of maintaining physical location association with an IP telephony instrument having an Ethernet MAC address in an IP system. The method includes the steps of: sending at least one information prompt from a call controller to the IP telephony instrument, in response to rebooting of the IP system; receiving a response to the at least one information prompt, the response including a physical location of the IP telephony instrument; and maintaining said physical location in association with said IP telephony instrument.

### Brief Description of the Drawings

The invention will be better understood with reference to the drawing, and following description, in which:

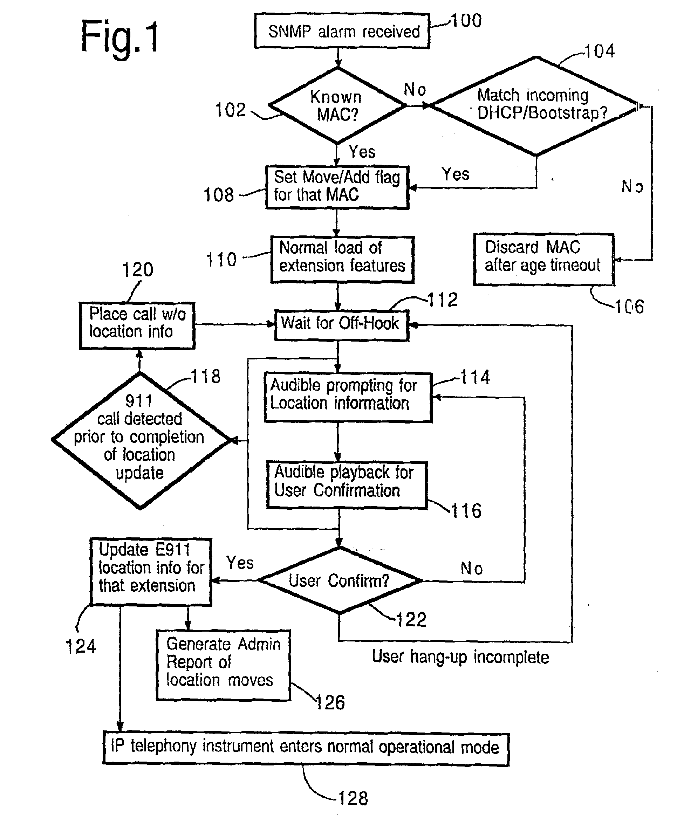

Fig. 1 is a flow chart of a method for maintaining physical location association with IP telephony instruments according to an embodiment of the present invention

### Detailed Description of Preferred Embodiments

Reference is made to Figure 1 to describe a method of maintaining physical location association with an IP telephony instrument on a network, according to an embodiment of the present invention. When a change is made to the Ethernet MAC address on a switch port, the change is detected at the switch and a system network management protocol (SNMP) alarm is generated. The switch is configured to generate an SNMP alarm when the physical Ethernet MAC address on any one of the associated switch ports changes. A change of an Ethernet MAC address results from moving the IP telephony instrument to a different switch port or adding an IP telephony instrument to the network, for example. The telephony instrument of the present embodiment is an IP telephone, however, other telephony instruments, including multimedia telephony instruments such as IP videophones, conferencing units, etc., can be used, as would occur to one of skill in the art.

The SNMP alarm is sent to the IP telephony call controller along with the physical MAC address of the IP telephone that is now connected to the switch port. The alarm is then received by the telephony call controller at step 100, thereby notifying the telephony call controller of the change.

Upon receipt of the SNMP alarm and the associated MAC address, the telephony call controller compares the physical MAC address to prior configured MAC addresses at step 102. The call controller thereby determines if the IP telephone is a prior configured telephony instrument that has been moved. If the MAC address is identified as a known MAC address, the MAC address is flagged within the telephony call controller at step 108.

If the MAC address is not a prior configured telephony instrument, the telephony call controller will not recognize the telephony instrument and temporarily stores the MAC address to determine the nature of the telephony instrument being added. If the telephony instrument being added is an IP telephony instrument, the IP telephony instrument is identified as part of a dynamic host configuration protocol (DHCP)/Bootstrap process at step 104. After the IP telephone is identified, the MAC address is then flagged within the telephony call controller at step 108. Alternatively, if the telephony instrument being added is not an IP telephony instrument, the MAC address is discarded at step 106.

Now that the physical MAC address is flagged within the telephony call controller as a new or moved telephony instrument, at step 108, the configuration of the telephone, the extension number and the features and functions of the telephone are automated at step 110 and the call controller waits for the telephone to go off-hook at step 112. No outgoing calls, however, with the exception of emergency calls (for example, 911), can be made yet.

When the IP telephone goes off hook, the IP telephony call controller sends an audible prompt to the IP telephone at step 114. The audible prompt is sent rather than a dial tone, and instructs the user to enter information including the physical location of the telephone. The user then enters the physical location information. This can be accomplished by information entry on the keypad of the telephone with audible playback of the information at step 116. The call controller system software performs text to speech conversion to provide audible feedback to the user to confirm the numeric location information that was entered.

Alternatively, the IP telephone system can include voice recognition software with audible system playback so that the location information is spoken into the telephone receiver and the voice recognition software interprets the speech and translates it into numeric location information.

At step 122, the telephony call controller sends a confirmation prompt, asking the user to confirm the entered location information. Again, this can be accomplished by pressing a button on the telephone keypad or by voice confirmation, if voice recognition software is provided. If the user does not complete the entry of the location information and hangs up the telephone before completion, the call controller returns to step 112 and awaits the off-hook condition again. In the event that the user does not confirm the information, for example, by stating "no" when prompted to confirm that the information is correct, the call controller returns to step 114 and sends another audible information prompt.

If the location information is not completely entered and confirmed, no outgoing calls can be made, with the exception of an emergency call. If, for example, a 911 call is placed, the call controller detects the 911 call at step 118 and places the call without the completed location information, at step 120. At the completion of the 911 call, the receiver is placed on-hook and the call controller returns to step 112 to await the off-hook condition.

When the user confirms the location information, at step 122, the emergency location information for the IP telephone extension is updated at step 124. An administrative report of location moves and add-ons is then generated at step 126. At step 128, the IP telephone enters normal operational mode.

### EXAMPLE

The following example is submitted to further illustrate the present invention. This example is intended to be illustrative only and is not intended to limit the scope of the present invention.

A telephone is moved from one switch port to a second switch port and the change to the Ethernet MAC address is detected at the switch. The switch then generates and sends the SNMP alarm to the IP telephony call controller. The SNMP alarm and the physical Ethernet MAC address is received by the IP telephony call controller (step 100).

The call controller compares the Ethernet MAC address to prior configured MAC addresses (step 102), determines that prior configured telephone has been moved and flags the MAC address (step 108). The configuration, extension number, and features and functions of the telephone are automatically applied to the telephone at step 110.

When the telephone goes off hook, the IP telephony call controller sends an information prompt to the telephone (step 114). In the present example, the prompt is an audible information prompt stating that "The system has detected that this extension number has been moved. Please enter your room or location number via the touch tone pad, or state your room or location number".

The user then enters the room or location number on the keypad or states the room or location number (step 116). The IP telephony call controller then asks for confirmation (step 122). In the present example, the confirmation prompt states "This extension number is now at room (or location) number 123. Press one to confirm this is correct, press two to change".

When the user presses one, the location is updated (step 124) and the telephone returns to normal operation (step 128).

While the embodiments discussed herein are directed to particular implementations of the present invention, it will be apparent that variations and modifications to these embodiments are within the scope of the invention as defined solely by the claims appended hereto. For example, rather than utilizing a standard SNMP alarm trap to notify the IP telephony call controller of a change in the physical MAC address for a given IP switch port, a proprietary message including the physical MAC address can be generated from the IP switch to the IP telephony call controller. Other variations and modifications will occur to those of skill in the art. All such variations and modifications are considered to be within the sphere and scope of the present invention.

It will be appreciated that a method in accordance with the invention may be performed by computer software running on a suitable processor. Such software may for example be carried on a disc, or downloaded from a network.

## Claims

1. A method of maintaining physical location association with an IP telephony instrument, comprising the steps of:
detecting a change of an Ethernet MAC address on a switch port;
notifying an IP telephony call controller of said change;
sending at least one information prompt from the IP telephony call controller to the IP telephony instrument;
receiving a response to said at least one information prompt, said response including a physical location of said IP telephony instrument; and
maintaining said physical location in association with said IP telephony instrument.

2. The method of maintaining physical location association according to claim 1, further comprising the steps of:
flagging the Ethernet MAC address within the telephony call controller; and
determining said IP telephony instrument is in an off-hook condition, prior to the step of sending said at least one information prompt to the IP telephony instrument, wherein said step of sending said at least one information prompt is performed when said IP telephony instrument is in the "off-hook" condition.

3. The method of maintaining physical location association according to claim 2, wherein the step of notifying a telephony call controller of said change comprises:
generating a standard network management protocol alarm in response to said change; and
sending the SNMP alarm and the physical Ethernet MAC address on the switch port to an IP telephony call controller.

4. The method of maintaining physical location association according to claim 2 wherein the step of notifying a telephony call controller of said change comprises:
generating a proprietary message including the Ethernet MAC address; and
sending said proprietary message from the switch to the IP telephony call controller.

5. The method of maintaining physical location association according to one of claims 3 and 4 wherein said IP telephony instrument is an IP telephone.

6. The method of maintaining physical location association according to one of claims 3 and 4 wherein said at least one information prompt is an audible prompt.

7. The method of maintaining physical location association according to claim 6 wherein said response is entered on a keypad of the IP telephony instrument.

8. The method of maintaining physical location association according to claim 6 wherein said response is a voice response and said method further comprises the step of converting said response into numeric location information using voice recognition software.

9. A method of maintaining physical location association with an IP telephony instrument having an Ethernet MAC address in an IP system, comprising the steps of:
sending at least one information prompt from a call controller to the IP telephony instrument, in response to rebooting of the IP system;
receiving a response to said at least one information prompt, said response including a physical location of said IP telephony instrument; and
maintaining said physical location in association with said IP telephony instrument.

10. The method of maintaining physical location association according to claim 9, further comprising the steps of:
flagging the Ethernet MAC address within the telephony call controller; and
determining when said IP telephony instrument is in an off-hook condition, prior to the step of sending said at least one information prompt to the IP telephony instrument, wherein said step of sending at least one information prompt is performed when said IP telephony instrument is in the "off-hook" condition.

11. A computer program including processor implementable instructions for performing a method according to any one of the preceding claims.
